# EUROPÄISCHE PATENTSCHRIFT

(11) **EP 1 449 692 B1**
(45) Veröffentlichungstag und Bekanntmachung des Hinweises auf die Patenterteilung: **09.04.2008**
(21) Anmeldenummer: 04002598.3
(22) Anmeldetag: 05.02.2004
(51) Int. Cl.: B60J 1/20

(54) **Sonnenschutzsystem für ein Kraftfahrzeug**
Sun shade system for a vehicle
Protection solaire systeme pour vehicule

(30) Priorität: 19.02.2003 DE 10306951; 03.06.2003 DE 20308651 U
(43) Veröffentlichungstag der Anmeldung: 25.08.2004
(73) Patentinhaber: ArvinMeritor GmbH, 63128 Dietzenbach (DE)
(72) Erfinder: Böhm, Horst, 60599 Frankfurt (DE); Stehning, Kai, 61250 Usingen (DE)
(74) Vertreter: Sties, Jochen

(56) Entgegenhaltungen:
- EP-A- 1 201 473
- EP-A- 1 211 109
- WO-A-03/058020
- DE-A- 4 200 422
- DE-A- 10 240 582
- DE-A- 19 619 474
- US-A- 501 674

## Beschreibung

Die Erfindung betrifft ein Sonnenschutzsystem für ein Kraftfahrzeug, insbesondere für eine Windschutzscheibe.

Im Stand der Technik bekannt sind Sonnenschutzsysteme für Schiebedächer. Diese bestehen entweder aus einem starren Himmelteil, das am Innenhimmel oder Dachöffnungssystem des Fahrzeugdachs verschiebbar angebracht ist, oder aus einem Rollo, das auf einer Wickelwelle aufgenommen ist und von dieser abgezogen werden kann.

Die bisher bekannten Sonnenschutzsysteme sind hinsichtlich ihrer Variabilität nicht immer zufriedenstellend. Insbesondere bei komplexen Dachformen oder bei abzuschattenden Öffnungen, deren Ränder nicht parallel zueinander sind, verbleiben Defizite. Außerdem entsteht bei Rollos das Problem, die Wickelrolle innerhalb des verfügbaren Bauraums unterzubringen.

Dokument EP 1 211 109 beschreibt ein Sonnenschutzsystem gemäß dem Oberbegriff des Anspruchs 1.

Die Aufgabe der Erfindung besteht somit darin, ein Sonnenschutzsystem zu schaffen, das variabel bei einer Vielzahl von Anwendungsfällen eingesetzt werden kann.

Erfindungsgemäß wird diese Aufgabe durch die im kennzeichnenden Teil des Patentanspruches 1 genannten Merkmale gelöst.

Das erfindungsgemäße Sonnenschutzsystem kombiniert die positiven Einzelmerkmale der bereits bekannten Sonnenschutzsysteme des Typs "starres Himmelteil" und _{"}Rollo". Da der Sonnenschutz präzise an allen Rändern geführt ist, kann er ähnlich wie ein starres Himmelteil verschoben werden, ohne daß die bei einem federbelasteten Rollo auftretenden Probleme gelöst werden müssen. Da der Sonnenschutz flexibel ist wie bei einem Rollo, müssen die Führungsschienen nicht geradlinig und parallel zueinander laufen, sondern können entsprechend der Dachkontur gekrümmt und schräg zueinander verlaufen.

Gemäß einer bevorzugten Ausführungsform der Erfindung ist vorgesehen, daß die beiden Führungsschienen schräg zueinander verlaufen und der Sonnenschutz quer zur von den Führungsschienen vorgegebenen Verschieberichtung elastisch ist. Das Material des Sonnenschutzes ist also ohne weitere Maßnahmen in der Lage, den sich ändernden Abstand zwischen den einander gegenüberliegenden Führungsschienen zu überspannen. Dabei kann entweder der gesamte Sonnenschutz aus einem Material bestehen, das elastisch ist, oder der Sonnenschutz kann aus zwei Materialien bestehen, von denen eines elastisch und das andere nicht elastisch ist. Das elastische Material ist dann nach Art einer Ausgleichsbahn ausgebildet.

Wenn die beiden Führungsschienen nicht parallel zueinander verlaufen, sind die Spriegel vorzugsweise teleskopartig ausgeführt. Insbesondere kann jeder Spriegel zwei seitlich hervorstehende Führungsarme aufweisen, die beide verschiebbar im Spriegel aufgenommen sind und von denen jeweils einer in einer Führungsschiene aufgenommen ist. Auf diese Weise kann der sich ändernde Abstand zwischen den beiden Führungsschienen in einfacher Weise ausgeglichen werden.

Vorzugsweise ist vorgesehen, daß die beiden Führungsarme mechanisch miteinander und mit dem Spriegel gekoppelt sind, so daß der Spriegel mittig zwischen den beiden Führungsschienen zentriert ist. Zu diesem Zweck kann insbesondere ein Zahnrad verwendet werden, das drehbar am Spriegel angebracht ist und in das zwei Zahnstangen eingreifen, von denen jeweils eine mit einem der Führungsarme verbunden ist. Alternativ wäre möglich, ein Ausgleichsgestänge zu verwenden, das einen drehbar am Spriegel gelagerten Ausgleichshebel aufweist. Auch ein Ausgleich mittels Federkraft ist denkbar. Diese mechanische Zentrierung gewährleistet mit geringem Bauaufwand, daß der Spriegel in jedem Fall mittig zwischen den beiden Führungsschienen geführt wird.

Gemäß der bevorzugten Ausführungsform der Erfindung ist ein Abstandshalter vorgesehen, der an den beiden Spriegeln angreift und sie in einem konstanten Abstand voneinander hält. Der Abstandshalter wirkt zum einen den Zugkräften entgegen, die vom Sonnenschutz auf die beiden Spriegel ausgeübt wird; der Abstandshalter gewährleistet, daß der Sonnenschutz straff zwischen den beiden Spriegeln gehalten wird und nicht durchhängen kann. Der Abstandshalter überträgt zum anderen Druckkräfte zwischen den beiden Spriegeln, wenn beispielsweise der Sonnenschutz durch Verschieben des vorderen Spriegels insgesamt zurückgeschoben wird.

Der Abstandshalter ist vorzugsweise ein zug- und drucksteif geführtes Kabel. Dieses kann sich aufgrund seiner Flexibilität an jeden beliebigen Verlauf der Führungsschienen anpassen.

Vorzugsweise ist in jeder Führungsschiene ein Kabel vorgesehen, wobei die beiden Kabel so miteinander gekoppelt sind, daß ihre den Spriegeln zugeordneten Enden nur parallel miteinander verschoben werden können. Hierfür ist vorzugsweise ein Koppelzahnrad vorgesehen, das mit den beiden Kabeln zusammenwirkt. Diese Kopplung der beiden Kabel gewährleistet, daß die beiden Enden der beiden Spriegel nicht in entgegengesetzten Richtungen verschoben werden können. Dadurch wird verhindert, daß sich der Sonnenschutz zwischen den beiden Führungsschienen schräg stellt oder gar verklemmt.

Der Sonnenschutz kann manuell in den beiden Führungsschienen verschoben werden. In diesem Fall ist das Koppelzahnrad frei drehbar. Alternativ oder auch zusätzlich kann vorgesehen sein, daß der Sonnenschutz durch einen Antrieb verstellt werden kann. In diesem Fall greift beispielsweise ein Elektromotor unmittelbar am Koppelzahnrad an.

Gemäß einer Alternative kann vorgesehen sein, daß eine sich quer zur Verschieberichtung erstreckende Koppelwelle vorgesehen ist, auf der drehfest zwei Zahnräder angebracht sind, die in der einen und der anderen Führungsschiene in das Kabel eingreifen. Auch auf diese Weise kann gewährleistet werden, daß die Kabel in den beiden Führungsschienen nur gleichzeitig miteinander parallel verschoben werden können.

In Abhängigkeit von konstruktiven Vorgaben können die beiden Führungsschienen entweder an einem Fahrzeugdach angebracht sein, so daß sie mit diesem ein vormontiertes Dachmodul bilden, oder sie können an einem Innenhimmel angebracht sein, der dann zusammen mit dem Sonnenschutzsystem eine vormontierte Baugruppe bildet, die an einem Fahrzeugdach angebracht werden kann.

Gemäß der bevorzugten Ausführungsform der Erfindung ist vorgesehen, daß der Sonnenschutz eine Windschutzscheibe eines Fahrzeugs wenigstens teilweise abdecken kann. Dies ist vorteilhaft bei Dachkonstruktionen, bei denen sich die Windschutzscheibe vergleichsweise weit nach hinten erstreckt, beispielsweise bis über den Kopf der auf den Vordersitzen sitzenden Fahrzeuginsassen. Bei einer solchen Windschutzscheibe könnte, wenn kein Sonnenschutz zur Verfügung steht, eine starke Sonneneinstrahlung als unangenehm empfunden werden.

Die Erfindung wird nachfolgend anhand einer bevorzugten Ausführungsform beschrieben, die in den beigefügten Zeichnungen dargestellt ist. In diesen zeigen:
- Figur 1 eine perspektivische Ansicht eines Fahrzeugdachs mit einem erfindungsgemäßen Sonnenschutzsystem, wobei sich der Sonnenschutz in einer vorgezogenen Stellung befindet;
- Figur 2 das Fahrzeugdach von Figur 1, wobei sich der Sonnenschutz in einer zurückgeschobenen Stellung befindet;
- Figur 3 eine perspektivische Darstellung des montierten Sonnenschutzsystems, wobei sich der Sonnenschutz in einer teilweise vorgezogenen Stellung befindet;
- Figur 4 eine Darstellung entsprechend derjenigen von Figur 3, wobei sich der Sonnenschutz in der zurückgeschobenen Stellung befindet;
- Figur 5 eine schematische Draufsicht auf das erfindungsgemäße Sonnenschutzsystem;
- Figur 6 in vergrößertem Maßstab den Bereich VI von Figur 5;
- Figur 7 in vergrößertem Maßstab den Ausschnitt VII von Figur 6;
- Figur 8 in vergrößertem Maßstab den Ausschnitt XIII von Figur 6;
- Figur 9 in einer schematischen Ansicht ein Detail des Sonnenschutzsystems;
- Figur 10 eine perspektivische Darstellung der Montage des erfindungsgemäßen Sonnenschutzsystems;
- Figur 11 schematisch einen Schnitt durch das Fahrzeugdach von Figur 1;
- Figur 12 schematisch ein Sonnenschutzsystem gemäß einer weiteren Ausführungsform der Erfindung.

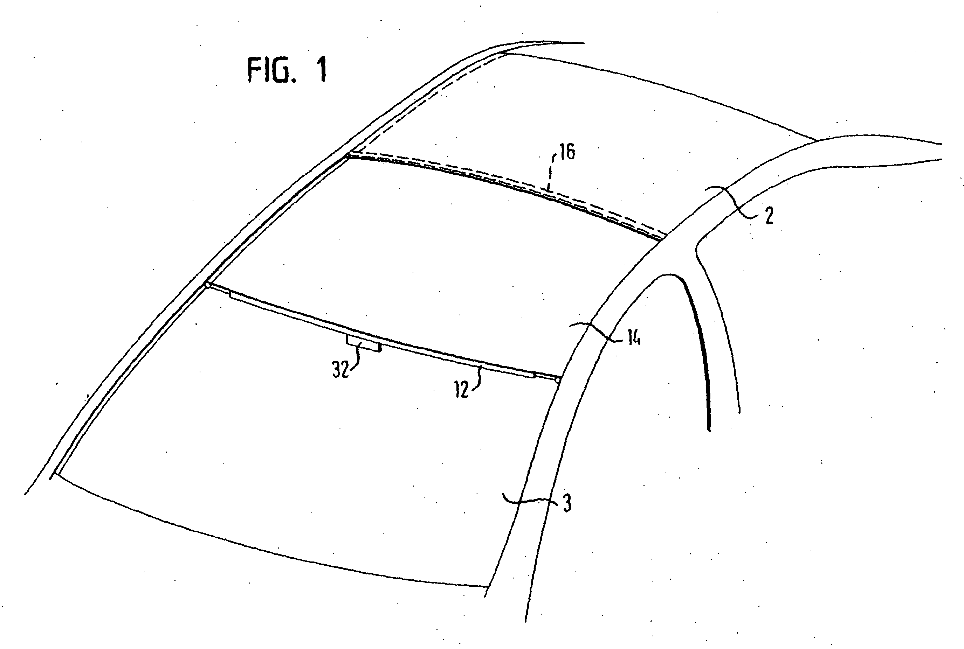

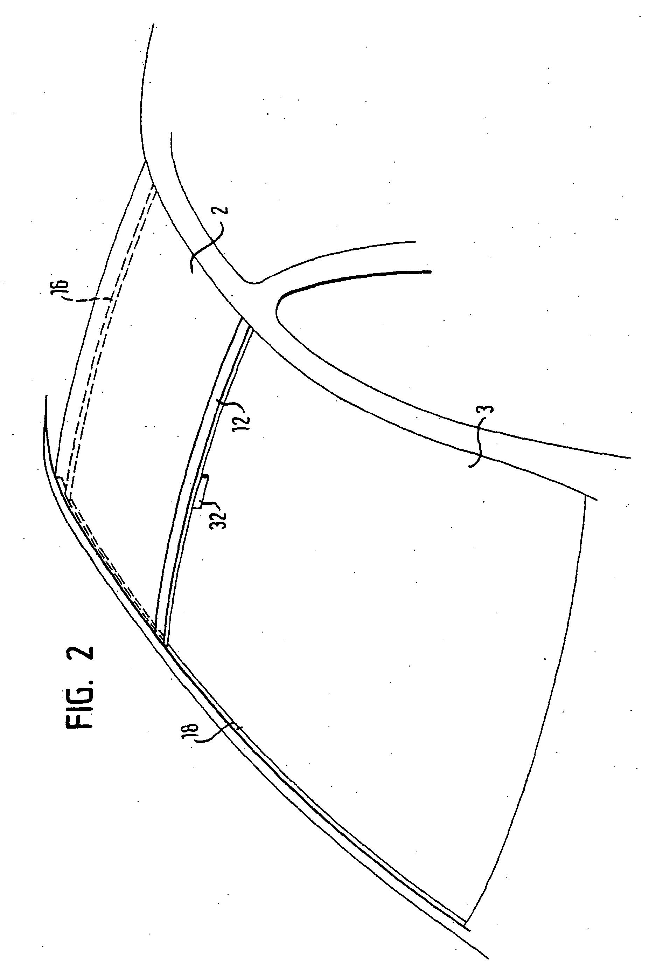

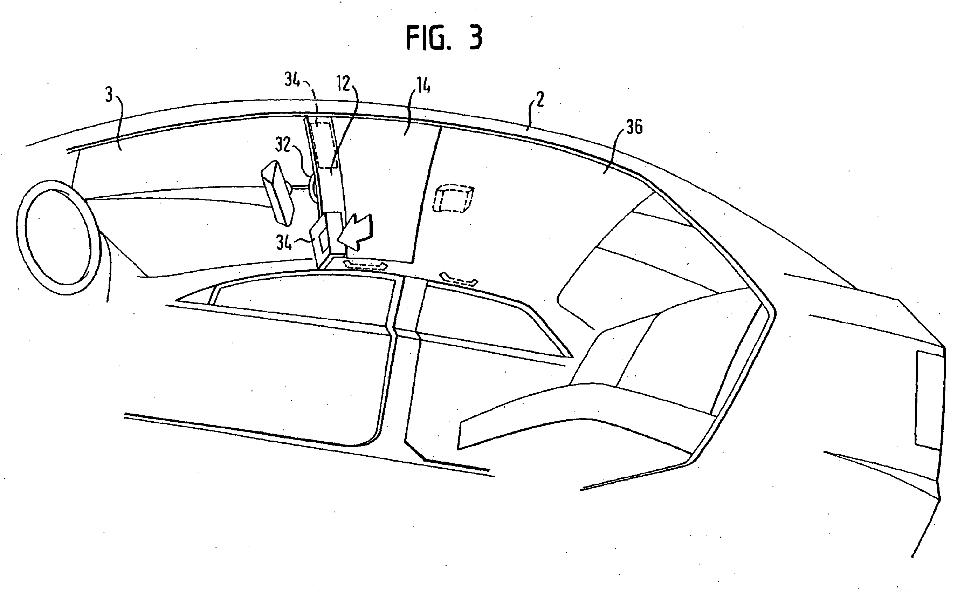

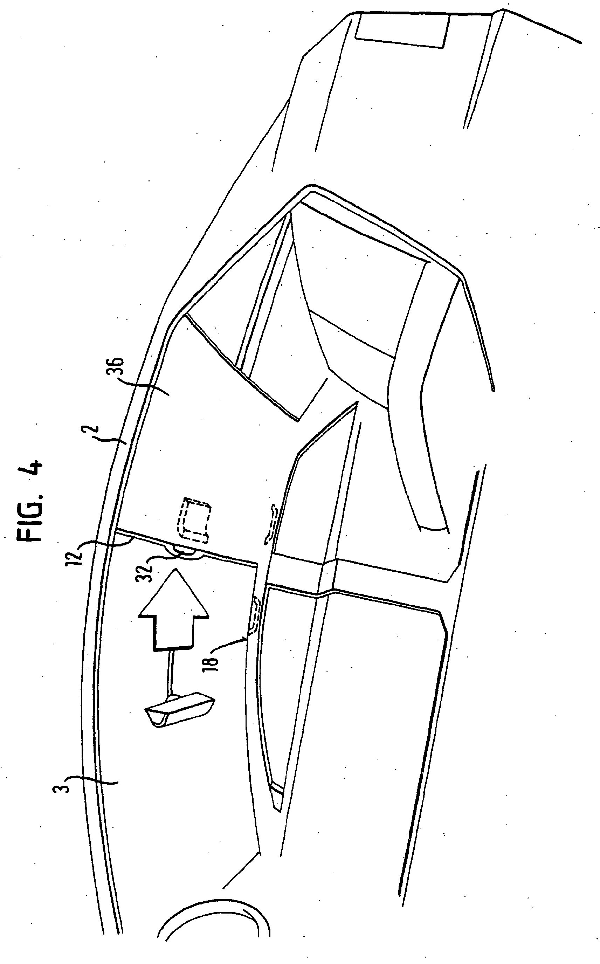

Anhand der Figuren 1 bis 4 wird zunächst allgemein das erfindungsgemäße Sonnenschutzsystem erläutert. Es ist insbesondere vorgesehen zur Anbringung an einem Fahrzeugdach 2, das mit einer vergleichsweise großen Windschutzscheibe 3 versehen ist. Wie in den Figuren 2 und 4 zu sehen ist, erstreckt sich die Windschutzscheibe 3 bis etwa auf Höhe der B-Säule des Fahrzeugs. Um eine unerwünschte Sonneneinstrahlung abschatten zu können, ist ein Sonnenschutzsystem 10 vorgesehen, von dem in den Figuren 1 bis 4 lediglich ein vorderer Spriegel 12 und ein Sonnenschutz 14 sichtbar sind. Der Sonnenschutz 14 kann zwischen einer zurückgeschobenen Stellung, die in den Figuren 2 und 4 dargestellt ist, und einer vorgezogenen Stellung verstellt werden, die in den Figuren 1 und 3 dargestellt ist. In der zurückgeschobenen Stellung befindet sich der vordere Spriegel 12 im Bereich des Übergangs zwischen der Windschutzscheibe 3 und dem lichtundurchlässigen Bereich des Fahrzeugdachs 2, und der Sonnenschutz 14 befindet sich unterhalb des lichtundurchlässigen Bereichs des Fahrzeugdachs 2. In der vorgezogenen Stellung befindet sich der vordere Spriegel 12 in Fahrtrichtung des Fahrzeugs gesehen nach vorne herausgezogen, so daß er etwa in dem Bereich liegt, in welchem bei herkömmlichen Fahrzeugen die Windschutzscheibe in das Fahrzeugdach übergeht. Der Sonnenschutz 14 deckt den Bereich der Windschutzscheibe ab, der zwischen dem vorderen Spriegel 12 und dem lichtundurchlässigen Bereich des Fahrzeugdaches 2 liegt.

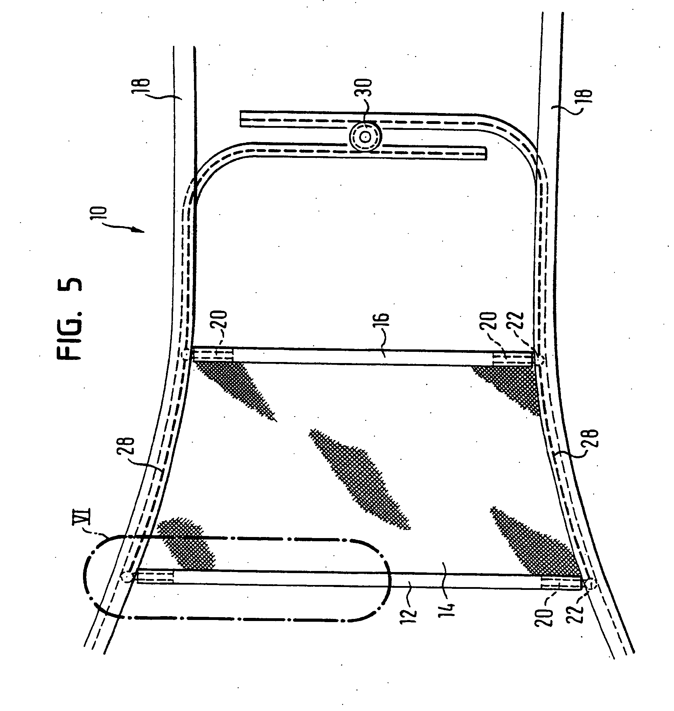

In Figur 5 ist das Sonnenschutzsystem schematisch dargestellt. Am dem vorderen Spriegel 12 gegenüberliegenden Rand des Sonnenschutzes 14 ist ein hinterer Spriegel 16 angebracht. Der Sonnenschutz 14 ist sowohl mit dem vorderen Spriegel 12 als auch dem hinteren Spriegel 16 fest verbunden. Die beiden Spriegel 12, 16 sind in zwei Führungsschienen 18 verschiebbar geführt. Die beiden Führungsschienen erstrecken sich entlang den Seitenrändern des Daches 2 und entlang einem Teil der Seitenränder der Windschutzscheibe 3. Wie in Figur 5 zu sehen ist, verlaufen die Führungsschienen 18 nicht parallel zueinander. In der Fahrtrichtung des Fahrzeugs betrachtet laufen die Führungsschienen vorne auseinander. Dies resultiert daraus, daß der Abstand zwischen den beiden A-Säulen eines Fahrzeugs sich von hinten nach vorne betrachtet vergrößert. Wie anhand der Figuren 1 bis 4 zu erkennen ist, verlaufen die beiden Führungsschienen 18 auch um die Querachse des Fahrzeugs gekrümmt, da das Fahrzeugdach und die Windschutzscheibe in dieser Richtung gekrümmt sind.

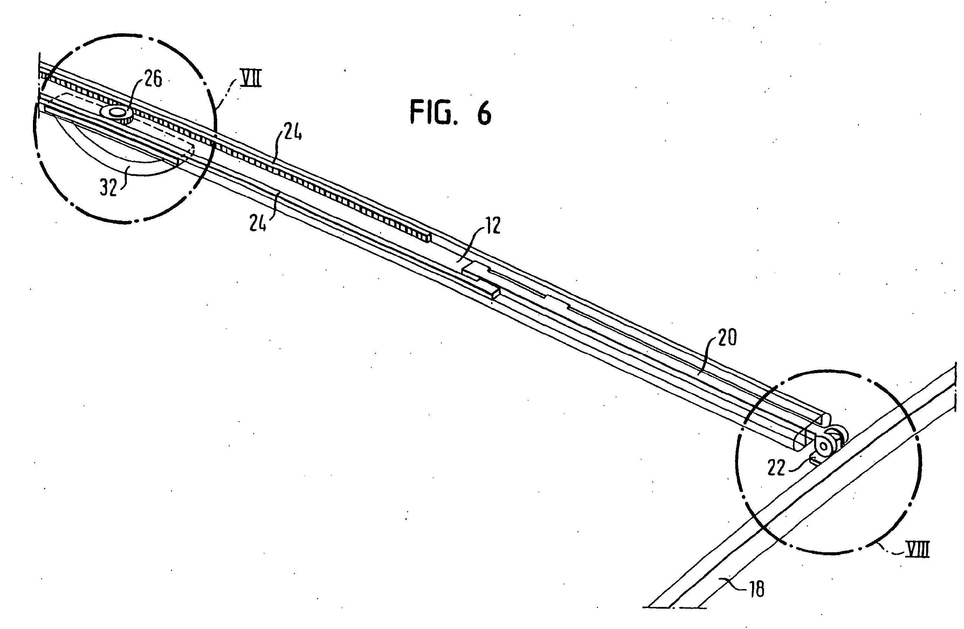

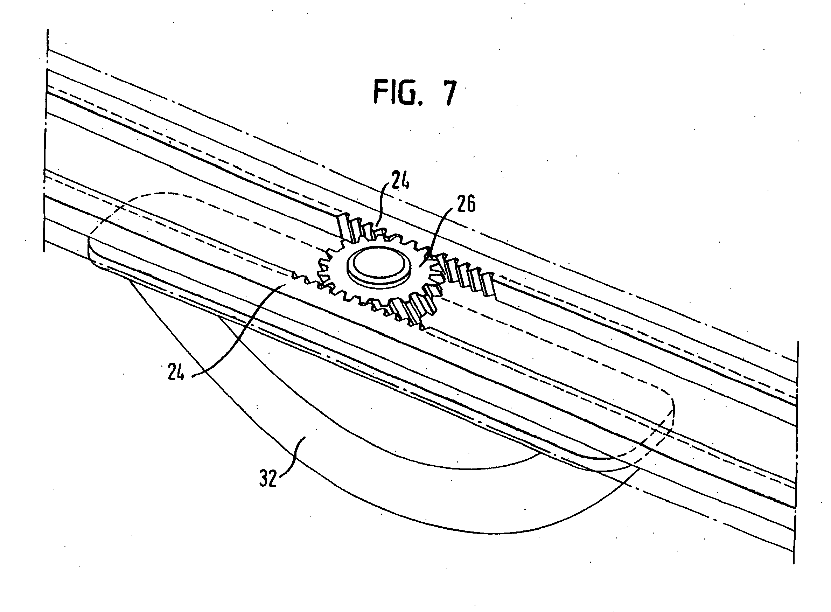

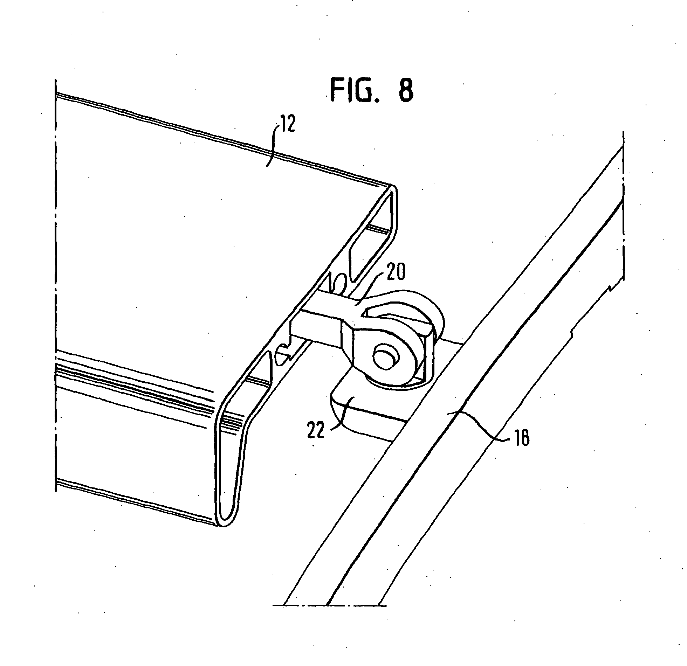

Um den sich ändernden Abstand zwischen den beiden Führungsschienen 18 auszugleichen, ist jeder Spriegel 12, 16 an jedem Ende mit einem Führungsarm 20 (siehe auch Figur 6) versehen, der verschiebbar im Spriegel aufgenommen ist. Das freie Ende des Führungsarmes ist mit einem Gleiter 22 (siehe auch Figur 8) verbunden, der verschiebbar in der entsprechenden Führungsschiene angeordnet ist. An seinem im Spriegel 12, 16 aufgenommenen Ende ist jeder Führungsarm 20 mit einer Zahnstange 24 versehen (siehe auch Figur 7), die in ein Zentrierzahnrad 26 eingreift. Das Zentrierzahnrad 26 ist drehbar am Spriegel 12, 16 gelagert, und die beiden Zahnstangen 24 der beiden Führungsarme 20 greifen auf bezüglich der Drehachse des Zentrierzahnrades 26 einander gegenüberliegenden Seiten in das Zentrierzahnrad ein. Dies gewährleistet, daß der Spriegel 12, 16 mittig zwischen den beiden Führungsschienen 18 zentriert ist.

Der Sonnenschutz 14, der sich zwischen den beiden Spriegeln 12, 16 erstreckt, ist seitlich in den beiden Führungsschienen 18 geführt. Zu diesem Zweck können auf die Seitenränder des Sonnenschutzes kleine Rutscher aus Kunststoff aufgespritzt sind, die im Profil der Führungsschienen 18 aufgenommen sind. Dies ist grundsätzlich aus beispielsweise der deutschen Patentanmeldung 197 39 919 bekannt.

Damit der sich ändernde Abstand zwischen den beiden Führungsschienen 18 ausgeglichen werden kann, besteht der Sonnenschutz 14 aus einem Material, das mindestens in Querrichtung elastisch ist, beispielsweise aus Stoff. Geeignet ist auch eine Kunststoffolie mit ausreichender Elastizität.

Die ausreichende Vorspannung des Sonnenschutzes 14 in Fahrzeuglängsrichtung wird dadurch erreicht, daß zwischen dem vorderen Spriegel 12 und dem hinteren Spriegel 16 ein Abstandshalter vorgesehen ist, der hier durch ein zugund drucksteif geführtes Kabel 28 gebildet ist. Die beiden Kabel 28 sind unmittelbar in der Führungsschiene aufgenommen. Außerdem sind die Gleiter 22 der beiden Spriegel 12, 16 fest mit den Kabeln 28 verbunden, da sie auf die Kabel aufgespritzt sind.

Wie in Figur 5 zu sehen ist, sind die beiden Kabel 28 über den hinteren Spriegel 16 hinausgeführt. Sie reichen bis zu einem Koppelzahnrad 30, das drehbar am Fahrzeugdach 2 angebracht ist. Die beiden Kabel 28 greifen auf einander gegenüberliegenden Seiten in das Koppelzahnrad ein, so daß sich die in den Führungsschienen 18 aufgenommenen Abschnitte des Kabels 28 nur parallel miteinander in derselben Richtung verstellen können, also entweder beiden Enden gleichzeitig nach vorne oder gleichzeitig nach hinten. Dies verhindert, daß die mit den Kabeln verbundenen Spriegel 12, 16 zwischen den Führungsschienen 18 verkantet werden können.

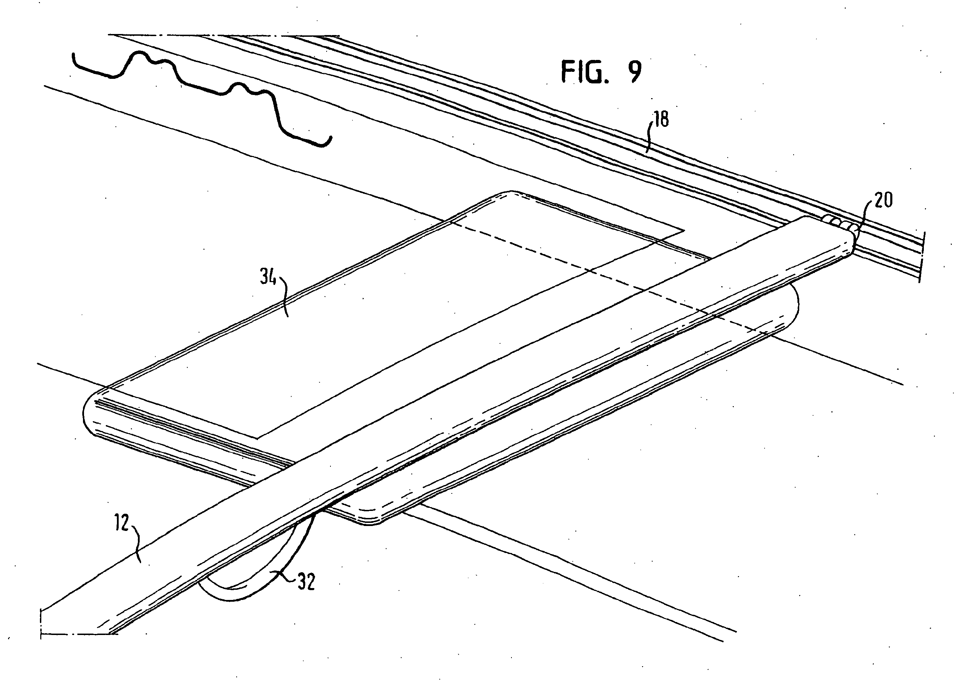

In Figur 9 ist ein Griff 32 zu sehen, der am vorderen Spriegel 12 angebracht ist. Der Griff dient dazu, den vorderen Spriegel 12 manuell zwischen der zurückgeschobenen und der vorgezogenen Stellung zu verschieben. Außerdem sind am vorderen Spriegel zwei Sonnenblenden 34 (siehe auch Figur 3) angebracht. Diese können, wenn der Spriegel 12 nach vorne hervorgezogen ist, nach unten abgeklappt werden. In der vollständig zurückgeschobenen Stellung liegt der vordere Spriegel 12 zusammen mit den Sonnenblenden 34 fast vollständig unter dem Innenhimmel des Fahrzeugdaches, so daß er verdeckt ist.

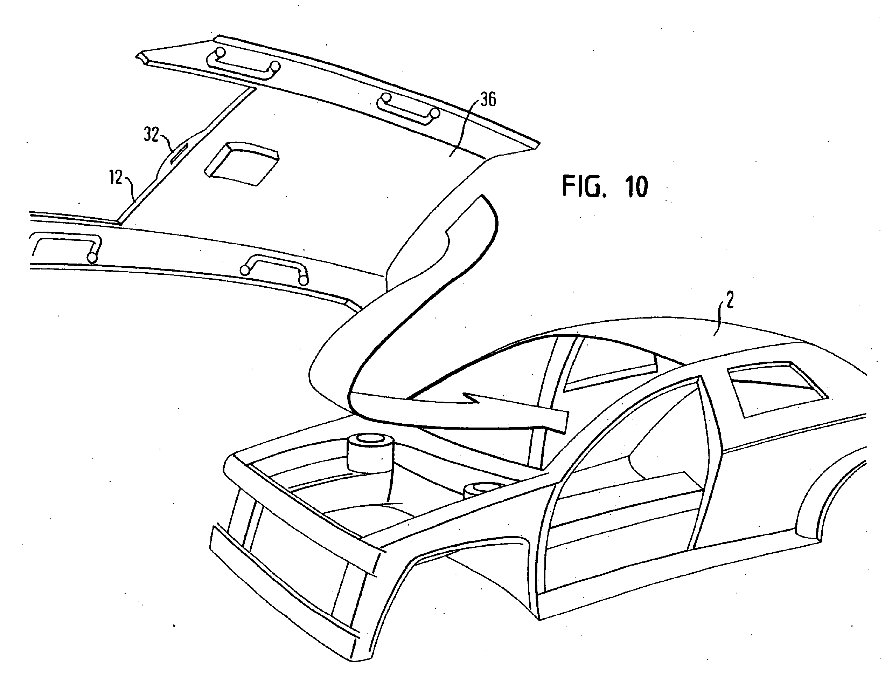

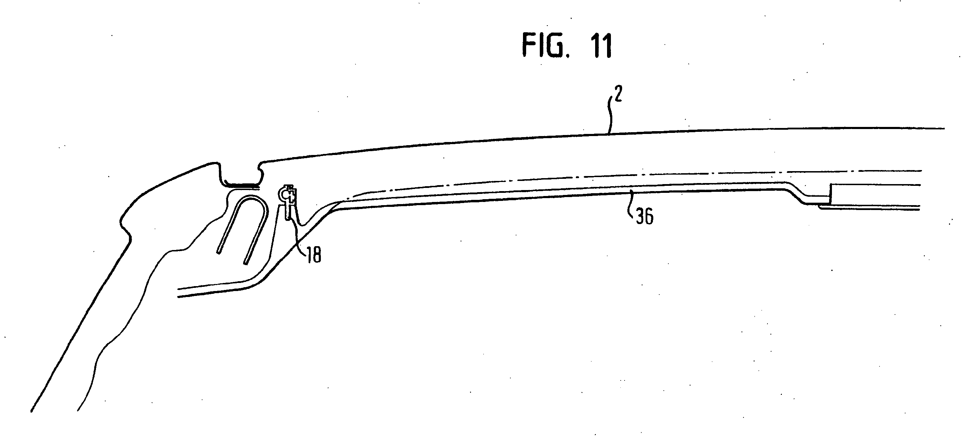

Wie in den Figuren 10 und 11 zu sehen ist, kann das Sonnenschutzsystem 10 an einem Fahrzeughimmel 36 vormontiert werden, so daß eine vorgefertigte Baugruppe gebildet ist, die dann im Fahrzeugdach 2 angebracht wird.

Wenn gewünscht wird, daß der Sonnenschutz 14 nicht manuell durch den Griff 32 verstellt wird, sondern automatisch, kann ein Antriebsmotor vorgesehen sein, der dann zweckmäßigerweise unmittelbar auf das Koppelzahnrad 30 einwirkt.

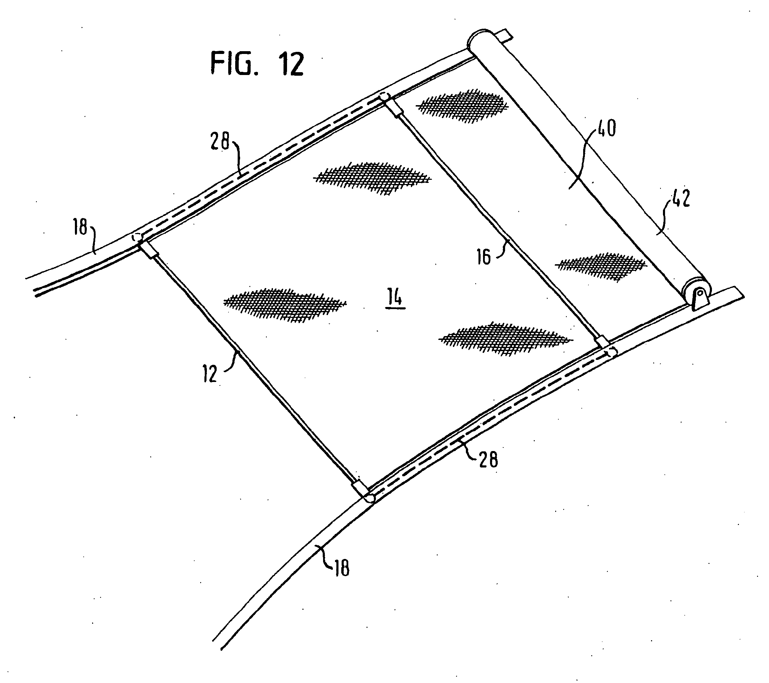

In Figur 12 ist schematisch ein Sonnenschutzsystem gemäß einer weiteren Ausführungsform gezeigt. Hinsichtlich des vorderen Spriegels 12, des Sonnenschutzes 14 und des hinteren Spriegels entspricht diese Ausführungsform dem voranstehend beschriebenen Sonnenschutzsystem. Der Unterschied zum voranstehend beschriebenen Sonnenschutzsystem besteht darin, daß am hinteren Spriegel 16 ein Rollo 40 angebracht ist. Das Rollo 40 kann in herkömmlicher Weise von einem Wickelkörper 42 abgezogen bzw. auf diesem aufgewickelt werden. Der Wickelkörper 42 ist drehbar und federbeaufschlagt zwischen Dachhimmel und Außenhaut angebracht.

Als Material für das Rollo kann ein beliebiges Material verwendet werden, das zum einen auf dem Wickelkörper aufwickelbar ist und zum anderen die jeweiligen Anforderungen hinsichtlich der gewünschten Lichtabschattung erfüllt. Der Sonnenschutz 14 kann aus demselben Material ausgeführt sein wie das Rollo 40 oder auch aus einem anderen Material.

Der wesentlichste Vorteil der in Figur 12 gezeigten Ausführungsform besteht darin, daß insgesamt ein größerer transparenter Dachbereich abgeschattet werden kann. Da ein Teil des Sonnenschutzes kompakt aufgewickelt wird, nämlich das Rollo, und sich dadurch die Länge des Sonnenschutzes verringert, kann der Dachabschnitt, hinter den der zwischen den Spriegeln liegender Teil des Sonnenschutzes geschoben wird, kürzer ausgeführt werden. Gleichzeitig ergibt sich keine Einschränkung der Kopffreiheit, da nicht der gesamte Sonnenschutz aufgewickelt werden muß, sondern nur das Rollo, was zu einem kleineren Durchmesser der Wickelrolle führt.

Ein weiterer Unterschied zur in den Figuren 1 bis 11 gezeigten Ausführungsform besteht darin, daß das Rollo 40 den hinteren Spriegel und damit über den Sonnenschutz 14 auch den vorderen Spriegel so weit stabilisiert und führt, daß eine zusätzliche Kopplung der beiden Spriegel, etwa über das Koppelzahnrad, nicht erforderlich ist; ein Verkanten der Spriegel ist aufgrund des Rollos nicht möglich.

### Bezugszeichenliste:

- 2:: Fahrzeugdach
- 3:: Windschutzscheibe
- 10:: Sonnenschutzsystem
- 12:: vorderer Spriegel
- 14:: Sonnenschutz
- 16:: hinterer Spriegel
- 18:: Führungsschiene
- 20:: Führungsarm
- 22:: Gleiter
- 24:: Zahnstange
- 26:: Zentrierzahnrad
- 28:: Kabel
- 30:: Koppelzahnrad
- 32:: Griff
- 34:: Sonnenblende
- 36:: Innenhimmel
- 40:: Rollo
- 42:: Wickelkörper

## Patentansprüche

1. Sonnenschutzsystem (10) für ein Kraftfahrzeug, mit zwei Führungsschienen (18) und einem vorderen Spriegel (12) **dadurch gekennzeichnet, dass** das Sonnenschutz system einen hinteren Spriegel (16) aufweist, wobei beide Spriegel (12, 16) sich zwischen den beiden Führungsschienen (18) erstrecken und in diesen geführt sind, und einem flexiblen Sonnenschutz (14), der am vorderen und am hinteren Spriegel (12, 16) befestigt und in den beiden Führungsschienen (18) geführt ist.

2. Sonnenschutzsystem nach Anspruch 1, **dadurch gekennzeichnet, daß** die beiden Führungsschienen (18) schräg zueinander verlaufen und der Sonnenschutz (14) quer zur von den Führungsschienen (18) vorgegebenen Verschieberichtung elastisch ist.

3. Sonnenschutzsystem nach Anspruch 2, **dadurch gekennzeichnet, daß** der Sonnenschutz (14) aus einem Material besteht, das elastisch ist.

4. Sonnenschutzsystem nach Anspruch 2, **dadurch gekennzeichnet, daß** der Sonnenschutz (14) aus zwei Materialien besteht, von denen eines elastisch und das andere nicht elastisch ist.

5. Sonnenschutzsystem nach einem der vorhergehenden Ansprüche, **dadurch gekennzeichnet, daß** der Spriegel (12,16) teleskopartig ausgeführt sind.

6. Sonnenschutzsystem nach Anspruch 5, **dadurch gekennzeichnet, daß** der Spriegel (12, 16) zwei seitlich hervorstehende Führungsarme (20) aufweist, die beide verschiebbar im Spriegel (12, 16) aufgenommen sind und von denen jeweils einer in einer Führungsschiene (18) aufgenommen ist.

7. Sonnenschutzsystem nach Anspruch 6, **dadurch gekennzeichnet, daß** die beiden Führungsarme (20) mechanisch miteinander und mit dem Spriegel (12, 16) gekoppelt sind, so daß der Spriegel (12, 16) mittig zwischen den beiden Führungsschienen (18) zentriert ist.

8. Sonnenschutzsystem nach Anspruch 7, **dadurch gekennzeichnet, daß** zur Zentrierung ein Zentrierzahnrad (26) verwendet wird, das drehbar am Spriegel (12, 16) angebracht ist und in das zwei Zahnstangen (24) eingreifen, von denen jeweils eine mit einem der Führungsarme (20) verbunden ist.

9. Sonnenschutzsystem nach einem der vorhergehenden Ansprüche, **dadurch gekennzeichnet, daß** ein Gleiter (22) vorgesehen ist, der in der Führungsschiene (18) verschiebbar aufgenommen ist und an dem der Spriegel (12, 16) angebracht ist.

10. Sonnenschutzsystem nach einem der vorhergehenden Ansprüche, **dadurch gekennzeichnet, daß** an dem vorderen Spriegel (12) ein Griff (32) angebracht ist, mittels dem der Sonnenschutz (14) manuell verstellt werden kann.

11. Sonnenschutzsystem nach einem der vorhergehenden Ansprüche, **dadurch gekennzeichnet, daß** an dem vorderen Spriegel (12) eine Sonnenblende (34) angebracht ist, die nach unten abgeklappt werden kann.

12. Sonnenschutzsystem nach einem der vorhergehenden Ansprüche, **dadurch gekennzeichnet, daß** ein Abstandshalter (28) vorgesehen ist, der an den beiden Spriegeln (12, 16) angreift und sie in einem konstanten Abstand voneinander hält.

13. Sonnenschutzsystem nach Anspruch 12, **dadurch gekennzeichnet, daß** der Abstandshalter ein zug- und drucksteif geführtes Kabel (28) ist.

14. Sonnenschutzsystem nach Anspruch 13, **dadurch gekennzeichnet, daß** ein Kabel (28) in jeder Führungsschiene (18) vorgesehen ist und die beiden Kabel (28) so miteinander gekoppelt sind, daß ihre den Spriegeln zugeordnete Enden nur parallel miteinander verschoben werden können.

15. Sonnenschutzsystem nach Anspruch 14, **dadurch gekennzeichnet, daß** ein Koppelzahnrad (30) vorgesehen ist, das mit den beiden Kabeln (28) zusammenwirkt.

16. Sonnenschutzsystem nach Anspruch 15, **dadurch gekennzeichnet, daß** an dem Koppelzahnrad (30) ein Antriebsmotor angreift.

17. Sonnenschutzsystem nach einem der Ansprüche 13 bis 16 und nach Anspruch 9, **dadurch gekennzeichnet, daß** der Gleiter (22) auf das Kabel (28) aufgespritzt ist.

18. Sonnenschutzsystem nach einem der vorhergehenden Ansprüche, **dadurch gekennzeichnet, daß** die Führungsschienen (18) an einem Dach (2) eines Fahrzeugs angebracht sind.

19. Sonnenschutzsystem nach Anspruch 18, **dadurch gekennzeichnet, daß** die Führungsschienen (18) Bestandteil eines Dachöffnungssystems sind.

20. Sonnenschutzsystem nach einem der Ansprüche 1 bis 16, **dadurch gekennzeichnet, daß** die Führungsschienen (18) an einem Innenhimmel (36) angebracht ist, so daß eine vorgefertigte Baugruppe bestehend aus dem Sonnenschutzsystem (10) und dem Innenhimmel (36) gebildet ist.

21. Sonnenschutzsystem nach einem der vorhergehenden Ansprüche, **dadurch gekennzeichnet, daß** der Sonnenschutz (14) eine Windschutzscheibe (3) eines Fahrzeugs wenigstens teilweise abdecken kann.

22. Sonnenschutzsystem nach einem der vorhergehenden Ansprüche, **dadurch gekennzeichnet, daß** am hinteren Spriegel (16) ein Rollo (40) angebracht ist.

23. Sonnenschutzsystem nach Anspruch 22, **dadurch gekennzeichnet, daß** ein Wickelkörper (42) vorgesehen ist, auf dem das Rollo (40) aufgewickelt werden kann.

## Claims

1. Sunshade system (10) for a motor vehicle, with two guide rails (18) and a front bow (12), **characterized in that** the sunshade system has a rear bow (16), the two bows (12, 16) extending between the two guide rails (18) and being guided therein, and a flexible sunshade (14) which is fastened to the front and to the rear bow (12, 16) and is guided in the two guide rails (18).

2. Sunshade system according to Claim 1, **characterized in that** the two guide rails (18) run obliquely with respect to each other, and the sunshade (14) is elastic transversely with respect to the direction of displacement, which is predetermined by the guide rails (18).

3. Sunshade system according to Claim 2, **characterized in that** the sunshade (14) is composed of a material which is elastic.

4. Sunshade system according to Claim 2, **characterized in that** the sunshade (14) is composed of two materials, one of which is elastic and the other is inelastic.

5. Sunshade system according to one of the preceding claims, **characterized in that** the bows (12, 16) are of telescopic design.

6. Sunshade system according to Claim 5, **characterized in that** the bows (12, 16) have two laterally protruding guide arms (20) which are both held displaceably in the bows (12, 16) and of which each one is held in a guide rail (18).

7. Sunshade system according to Claim 6, **characterized in that** the two guide arms (20) are coupled mechanically to each other and to the bow (12, 16) such that the bow (12, 16) is centred in the middle between the two guide rails (18).

8. Sunshade system according to Claim 7, **characterized in that** a centring toothed wheel (26) is used for the centring, the centring toothed wheel being attached rotatably to the bow (12, 16) and in which two toothed racks (24) engage, of which each one is connected to one of the guide arms (20).

9. Sunshade system according to one of the preceding claims, **characterized in that** there is a slider (22) which is held displaceably in the guide rail (18) and to which the bow (12, 16) is attached.

10. Sunshade system according to one of the preceding claims, **characterized in that** a handle (32) is attached to the front bow (12) and can be used to manually adjust the sunshade (14).

11. Sunshade system according to one of the preceding claims, **characterized in that** a sun visor (34) which can be unfolded downwards is attached to the front bow (12).

12. Sunshade system according to one of the preceding claims, **characterized in that** a spacer (28) is provided which acts on the two bows (12, 16) and keeps them at a constant distance from each other.

13. Sunshade system according to Claim 12, **characterized in that** the spacer is a cable (28) which is guided in a manner rigid in tension and compression.

14. Sunshade system according to Claim 13, **characterized in that** one cable (28) is provided in each guide rail (18) and the two cables (28) are coupled to each other in such a manner that their ends which are assigned to the bows can only be displaced parallel to each other.

15. Sunshade system according to Claim 14, **characterized in that** there is a coupling toothed wheel (30) which interacts with the two cables (28).

16. Sunshade system according to Claim 15, **characterized in that** a driving motor acts on the coupling toothed wheel (30).

17. Sunshade system according to one of Claims 13 to 16 and according to Claim 9, **characterized in that** the slider (22) is sprayed onto the cable (28).

18. Sunshade system according to one of the preceding claims, **characterized in that** the guide rails (18) are attached to a roof (2) of a vehicle.

19. Sunshade system according to Claim 18, **characterized in that** the guide rails (18) are part of a roof opening system.

20. Sunshade system according to one of Claims 1 to 16, **characterized in that** the guide rails (18) are attached to an inside headlining (36), and therefore a premanufactured subassembly comprising the sunshade system (10) and the inside headlining (36) is formed.

21. Sunshade system according to one of the preceding claims, **characterized in that** the sunshade (14) can at least partially cover a windscreen (3) of a vehicle.

22. Sunshade system according to one of the preceding claims, **characterized in that** a roller blind (40) is attached to the rear bow (16).

23. Sunshade system according to Claim 22, **characterized in that** there is a winding body (42) on which the roller body (40) can be wound up.

## Revendications

1. Système de protection solaire (10) pour un véhicule automobile, comprenant deux rails de guidage (18) et un arceau avant (12), **caractérisé en ce que** le système de protection solaire présente un arceau arrière (16), les deux arceaux (12, 16) s'étendant entre les deux rails de guidage (18) et étant guidés dans ceux-ci et le système comprenant une protection solaire flexible (14), qui est fixée à l'arceau avant et à l'arceau arrière (12, 16) et qui est guidée dans les deux rails de guidage (18).

2. Système de protection solaire selon la revendication 1, **caractérisé en ce que** les deux rails de guidage (18) s'étendent en biais l'un par rapport à l'autre et la protection solaire (14) est élastique transversalement à la direction de déplacement prédéfinie par les rails de guidage (18).

3. Système de protection solaire selon la revendication 2, **caractérisé en ce que** la protection solaire (14) se compose d'un matériau élastique.

4. Système de protection solaire selon la revendication 2, **caractérisé en ce que** la protection solaire (14) se compose de deux matériaux dont l'un est élastique et l'autre pas.

5. Système de protection solaire selon l'une quelconque des revendications précédentes, **caractérisé en ce que** les arceaux (12, 16) sont réalisés de manière télescopable.

6. Système de protection solaire selon la revendication 5, **caractérisé en ce que** l'arceau (12, 16) présente deux bras de guidage (20) saillant latéralement qui sont tous les deux reçus de manière coulissante dans l'arceau (12, 16) et dont chacun est reçu dans un rail de guidage (18).

7. Système de protection solaire selon la revendication 6, **caractérisé en ce que** les deux bras de guidage (20) sont accouplés mécaniquement l'un à l'autre et à l'arceau (12, 16), de sorte que l'arceau (12, 16) soit centré au milieu des deux rails de guidage (18).

8. Système de protection solaire selon la revendication 7, **caractérisé en ce que** l'on utilise pour le centrage une roue dentée de centrage (26) qui est montée à rotation sur l'arceau (12, 16) et dans laquelle s'engagent deux crémaillères (24), dont chacune est connectée à l'un des bras de guidage (20).

9. Système de protection solaire selon l'une quelconque des revendications précédentes, **caractérisé en ce qu'**il est prévu un coulisseau (22) qui est reçu à coulissement dans le rail de guidage (18) et sur lequel est monté l'arceau (12, 16).

10. Système de protection solaire selon l'une quelconque des revendications précédentes, **caractérisé en ce que** l'on monte sur l'arceau avant (12) une poignée (32) au moyen de laquelle la protection solaire (14) peut être déplacée manuellement.

11. Système de protection solaire selon l'une quelconque des revendications précédentes, **caractérisé en ce que** l'on monte sur l'arceau avant (12) un pare-soleil (34) qui peut être rabattu vers le bas.

12. Système de protection solaire selon l'une quelconque des revendications précédentes, **caractérisé en ce que** l'on prévoit un dispositif d'espacement (28) qui vient en prise sur les deux arceaux (12, 16) et qui les maintient à une distance constante l'un de l'autre.

13. Système de protection solaire selon la revendication 12, **caractérisé en ce que** le dispositif d'espacement est un câble (28) guidé de manière rigide en traction et en compression.

14. Système de protection solaire selon la revendication 13, **caractérisé en ce que** l'on prévoit un câble (28) dans chaque rail de guidage (18) et les deux câbles (28) sont accouplés l'un à l'autre de telle sorte que leurs extrémités associées aux arceaux ne puissent être déplacées que parallèlement l'une à l'autre.

15. Système de protection solaire selon la revendication 14, **caractérisé en ce que** l'on prévoit une roue dentée d'accouplement (30) qui coopère avec les deux câbles (28).

16. Système de protection solaire selon la revendication 15, **caractérisé en ce qu'**un moteur d'entraînement vient en prise sur la roue dentée d'accouplement (30).

17. Système de protection solaire selon l'une quelconque des revendications 13 à 16, et selon la revendication 9, **caractérisé en ce que** le coulisseau (22) est moulé par pulvérisation sur le câble (28).

18. Système de protection solaire selon l'une quelconque des revendications précédentes, **caractérisé en ce que** les rails de guidage (18) sont montés sur un toit (2) d'un véhicule.

19. Système de protection solaire selon la revendication 18, **caractérisé en ce que** les rails de guidage (18) font partie d'un système d'ouverture de toit.

20. Système de protection solaire selon l'une quelconque des revendications 1 à 16, **caractérisé en ce que** les rails de guidage (18) sont montés sur un habillage interne de plafond (36), de sorte qu'un module préfabriqué constitué du système de protection solaire (10) et de l'habillage interne du plafond (36) soit obtenu.

21. Système de protection solaire selon l'une quelconque des revendications précédentes, **caractérisé en ce que** la protection solaire (14) peut couvrir au moins partiellement un pare-brise (3) d'un véhicule.

22. Système de protection solaire selon l'une quelconque des revendications précédentes, **caractérisé en ce que** l'on monte sur l'arceau arrière (16) un store déroulant (40).

23. Système de protection solaire selon la revendication 22, **caractérisé en ce que** l'on prévoit un corps d'enroulement (42) sur lequel le store déroulant (40) peut être enroulé.
